# EUROPÄISCHE PATENTSCHRIFT

(11) **EP 1 148 038 B1**
(45) Veröffentlichungstag und Bekanntmachung des Hinweises auf die Patenterteilung: **02.05.2002**
(21) Anmeldenummer: 01106303.9
(22) Anmeldetag: 15.03.2001
(51) Int. Cl.: C04B 26/00, C09J 131/02, C09J 131/04

(54) **Verwendung von in Wasser redispergierbaren Polymerpulvern in Baukleber-Zusammensetzungen**
Utilisation of redispersible polymer powders in construction adhesives
Utilisation de poudres polymères redispersibles pour l'adhésifs de construction

(30) Priorität: 20.04.2000 DE 10019598
(43) Veröffentlichungstag der Anmeldung: 24.10.2001
(73) Patentinhaber: Wacker Polymer Systems GmbH & Co. KG, 84489 Burghausen (DE)
(72) Erfinder: Weitzel, Hans-Peter, Dr., 84571 Reischach (DE)
(74) Vertreter: Schuderer, Michael, Dr.

(56) Entgegenhaltungen:
- EP-A- 0 103 253
- EP-A- 1 069 169
- PATENT ABSTRACTS OF JAPAN vol. 018, no. 371 (C-1224), 13. Juli 1994 (1994-07-13) & JP 06 100344 A (DENKI KAGAKU KOGYO KK), 12. April 1994 (1994-04-12)

## Beschreibung

Die Erfindung betrifft die Verwendung von in Wasser redispergierbaren Polymerpulvern auf Basis von mit Schutzkolloiden stabilisierten Vinylesterpolymerisaten in Baukleber-Zusammensetzungen.

Schutzkolloid-stabilisierte Polymerisate werden vor allem in Form deren wässrigen Dispersionen oder in Wasser redispergierbaren Polymerpulver in vielerlei Anwendungen, beispielsweise als Beschichtungsmittel oder Klebemittel für die unterschiedlichsten Substrate, beispielsweise als zementäre Fliesenkleber, eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen, beispielsweise Emulgatoren, stabilisiert sind, selbst zur Festigkeit (z.B. Haftzugswerte im Fliesenkleber) beiträgt. Als Monomere zur Herstellung von redispergierbaren Pulvern werden bisher bevorzugt Vinylester und Ethylen eingesetzt. Bei Verwendung der Kombination Vinylester mit Ethylen ist für die Einstellung der Verseifungsstabilität ein hoher Ethylengehalt notwendig, wodurch die Tg abgesenkt wird. Dies kann zu Beeinträchtigungen in der Haftzugfestigkeit der Fliesenkleber insbesondere nach Wärmelagerung führen. Wünschenswert ist aber ein konstantes und hohes Niveau der Haftzugfestigkeiten im Fliesenkleber nach allen Lagerungen (trocken, naß, Wärme und Frost-Tau).

Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität); denn es ist einem Anwender nicht zuzumuten, daß er innerhalb einer kurzen Zeitspanne eine neue Mischung anrühren muß. In der Beton- und Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frost-taustabil.

Aus der DE-A 2148456 (GB-A 1407827) sind Baukleber auf der Basis von Copolymerisaten bekannt, welche hydroxygruppenhaltige Siliciumverbindungen einpolymerisiert enthalten. Die EP-B 35332 beschreibt Fliesenkleber auf Basis von Styrolacrylatcopolymeren, welche neben hydroxygruppenhaltigen Siliciumverbindungen noch relativ hohe Mengen von bis zu 10 Gew.-% an (Meth)acrylsäureeinheiten einpolymerisiert enthalten.. In der EP-A 640630 wird zur Herstellung von Fliesenklebern die Verwendung von siliciummodifizierten Polymerdispersionen empfohlen, welche noch bis zu 4 Gew.-% an ethylenisch ungesättigten Carbonsäureamiden copolymerisiert enthalten.

Der Erfindung lag die Aufgabe zugrunde, stabile, niederviskose, Schutzkolloid-stabilisierte Dispersionspulver auf Basis von Vinylester-Polymerisaten zur Verfügung zu stellen, die beim Einsatz in zementären Anwendungen eine voll befriedigende Viskositäts- bzw. Zementstabilität besitzen und das Zementabbinden nicht behindern. Aufgabe war es weiterhin redispergierbare Pulver zur Verfügung zu stellen, die bessere und gleichmäßigere Haftzugfestigkeiten nach allen Lagerungen zeigen.

Üblicherweise werden zur Erreichung wasserresistenter Produkte bevorzugt hydrophobe Monomere eingesetzt. Überraschenderweise wurde nun gefunden, daß beim Einsatz von hydrophilen wasserlöslichen Monomeren bessere Haftzugfestigkeiten, selbst nach Naßund Frost-Tau-Lagerung, beobachtet werden.

Gegenstand der Erfindung ist die Verwendung von in Wasser redispergierbaren Polymerpulvern auf Basis von mit Schutzkolloiden stabilisierten Vinylesterpolymerisaten in Baukleber-Zusammensetzungen, dadurch gekennzeichnet, daß die Vinylester-Polymerisate 0.2 bis 1.5 Gew.-% bezogen auf das Gesamtgewicht der Vinylester-Polymerisate Hilfsmonomereinheiten enthalten, welche sich von Monomeren mit einer höheren Wasserlöslichkeit als Vinylacetat ableiten, wobei die Löslichkeit von Vinylacetat in Wasser etwa 2g pro 100g Wasser bei Normalbedingungen beträgt.

Geeignete Hilfsmonomere sind ethylenisch ungesättigte Mono- und Dicarbonsäuren sowie deren Anhydride, vorzugsweise Acrylsäure, Methacrylsäure, Itaconsäure, Crotonsäure, Fumarsäure und Maleinsäure sowie Maleinsäureanhydrid; ethylenisch ungesättigte Carbonsäureamide und -nitrile, vorzugsweise Acrylamid, Methacrylamid, Acrylamidoglykolsäure und Acrylnitril; ethylenisch ungesättigte Sulfonsäuren und deren Salze, vorzugsweise Vinylsulfonsäure, 2-Acrylamido-2-methyl-propansulfonsäure. Vorzugsweise beträgt die Menge an Hilfsmonomer 0.5 bis 1.0 Gew.-%, bezogen auf das Gesamtgewicht der Vinylester-Polymerisate.
Geeignete Vinylester sind ein oder mehrere Monomere aus der Gruppe der Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Gegebenenfalls können die Vinylesterpolymerisate noch weitere Comonomere aus der Gruppe der Ester der Acrylsäure oder Methacrylsäure von unverzweigten oder verzweigten Alkoholen mit 1 bis 15 C-Atomen, aus der Gruppe der Olefine, der Vinylhalogenide und der Mono- und Diester von ethylenisch ungesättigten Dicarbonsäuren enthalten. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat. Beispiele für copolymerisierbare Olefine sind Ethen und Propen. Aus der Gruppe der Vinylhalogenide wird üblicherweise Vinylchlorid eingesetzt. Geeignete Mono- und Diester von ethylenisch ungesättigten Dicarbonsäuren sind die Mono- und Diester der Fumarsäure und Maleinsäure wie deren Diethyl- und Diisopropylester.

Gegebenenfalls können noch 0.05 bis 10 Gew.-%, bezogen auf das Gesamtgewicht des Monomergemisches, weitere funktionelle Comonomere copolymerisiert werden. Beispiele hierfür sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Weitere Beispiele sind Epoxidgruppen enthaltende Comonomere wie Glycidylacrylat, Glycidylmethacrylat, Allylglycidether, Vinylglycidether, Vinylcyclohexenoxid.

Am meisten bevorzugt sind die nachfolgend genannten Basispolymere, welche noch die wasserlöslichen Hilfsmonomere und gegebenenfalls funktionelle Comonomereinheiten, in den eben beschriebenen Mengen aufweisen. Die Angaben in Gew.-% addieren sich mit dem Anteil an Hilfsmonomere und gegebenenfalls funktionelle Comonomereinheiten jeweils auf 100 Gew.-%.

Vinylester-Ethylen-Copolymere, wie Vinylacetat-Ethylen-Copolymere, mit einem Ethylengehalt von vorzugsweise 1 bis 60 Gew.-%, welche gegebenenfalls noch Fumarsäure- oder Maleinsäurediester, vorzugsweise deren Diethyl- und Diisopropylester enthalten;
Vinylester-Ethylen-Vinylchlorid-Copolymere mit einem Ethylengehalt von vorzugsweise 1 bis 40 Gew.-% und einem Vinylchlorid-Gehalt von vorzugsweise 20 bis 90 Gew.-%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}), enthalten sind;
Vinylacetat-Copolymere mit vorzugsweise 1 bis 50 Gew.-% eines oder mehrerer copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9^{R}, VeoVa10^{R}), welche gegebenenfalls noch 1 bis 40 Gew.-% Ethylen enthalten;
Vinylester-Acrylsäureester-Copolymerisate mit vorzugsweise 30 bis 90 Gew.-% Vinylester, insbesonders Vinylacetat, und vorzugsweise 1 bis 60 Gew.-% Acrylsäureester, insbesonders n-Butylacrylat oder 2-Ethylhexylacrylat, welche gegebenenfalls noch 1 bis 40 Gew.-% Ethylen enthalten;
Vinylester-Acrylsäureester-Copolymerisate mit vorzugsweise 30 bis 75 Gew.-% Vinylacetat, vorzugsweise 1 bis 30 Gew.-% Vinyllaurat oder Vinylester einer alpha-verzweigten Carbonsäure, insbesonders Versaticsäure-Vinylester, vorzugsweise 1 bis 30 Gew.-% Acrylsäureester, insbesonders n-Butylacrylat oder 2-Ethylhexylacrylat, welche gegebenenfalls noch 1 bis 40 Gew.-% Ethylen enthalten.

Die Monomerauswahl bzw. die Auswahl der Gewichtsanteile der Comonomere erfolgt dabei so, daß im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, t-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere geeignete Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015. Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 50 bis 100 Gew.-%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden. Die Hilfsmonomeren können abhängig von ihrer chemischen Natur ebenfalls vollständig vorgelegt oder dosiert werden. Auch teilweise Vorlage oder Dosierung ist möglich. Der Monomerumsatz wird mit der Initiatordosierung gesteuert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die aus der Polymerisation resultierenden wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt, die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Zur Herstellung der Baukleber wird das Polymerpulver mit den weiteren Rezepturbestandteilen wie Zement, Füllstoff und weiteren Zuschlägen in geeigneten Mischern gemischt und homogenisiert. Die Dispersionspulver-Zusammensetzung kann gegebenenfalls auch in Form einer wässrigen Redispersion auf der Baustelle zugegeben werden (2-Komponenten-Kleber). Vorzugsweise wird eine Trockenmischung hergestellt und das zur Verarbeitung erforderliche Wasser unmittelbar vor der Verarbeitung hinzugefügt. Bei der Herstellung von pastösen Bauklebern wird zunächst der Wasseranteil vorgelegt, die Dispersion zugegeben und abschließend die Feststoffe eingerührt.

Typische zementhaltige Baukleberrezepturen enthalten 5 bis 80 Gew.-% Zement, 5 bis 80 Gew.-% Füllstoffe wie Quarzsand, Calciumcarbonat oder Talkum, 0.1 bis 2 Gew.-% Verdickungsmittel wie Celluloseether, Schichtsilikate, Polyacrylate, 0.5 bis 60 Gew.-% der Schutzkolloid-stabilisierten Polymerpulver und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur. Die genannten zementhaltigen Baukleberrezepturen finden vor allem bei der Verlegung von Fliesen aller Art (Steingut, Steinzeug, Feinststeinzeug, Keramik, Naturfliesen) im Innen- und Außenbereich als Fliesenkleber Verwendung und werden vor deren Verwendung noch mit der entsprechenden Menge Wasser angerührt.

Die Schutzkolloid-stabilisierten Polymerpulver eignen sich auch zur Verwendung in zementfreien Baukleberrezepturen, beispielsweise mit der entsprechenden Menge Gips anstelle von Zement als anorganischem Bindemittel in der obengenannten Rezeptur. Die zementfreien Baukleberrezepturen finden vor allem bei der Verlegung von Fliesen aller Art (Steingut, Steinzeug, Feinststeinzeug, Keramik, Naturfliesen) im Innenbereich als Fliesenkleber und bei der Verklebung von Polystyrolplatten auf Fassaden als Vollwärmeschutzkleber Verwendung.

Die nachfolgenden Beispiele dienen der weiteren Erläuterung der Erfindung:

### Beispiele:

Mittels Emulsionspolymerisation wurden Polymerdispersionen mit einer Polymerzusammensetzung von Vinylacetat : Ethylen von 100 : 7 Gewichtsteilen hergestellt. Zur Stabilisierung wurden 8 Gew.-%, bezogen auf Vinylacetat, eines Polyvinylalkohols mit einem Hydrolysegrad von 88 Mol-% und einer Viskosität nach Höppler von 4 mPas verwendet. Die Menge und Art der verwendeten Hilfsmonomere (Gew.-% bezogen auf Vinylacetat) sind in Tabelle 1 wiedergegeben.

### Pulverherstellung:

Die Dispersionen aus den Beispielen wurden mit 5 Gew.-% (fest/fest) Polyvinylalkohol mit einem Hydrolysegrad von 88 Mol-% und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-%, bezogen auf das Copolymer, handelsüblichem Antiblockmittel (Gemisch aus Calcium-Magnesium-Carbonat und Magnesiumhydrosilikat) versetzt.

### Anwendungstechnische Prüfung:

### Redispergierverhalten der Polymerfilme (R):

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.

Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

### Bestimmung der Blockfestigkeit (B):

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 =: sehr gute Blockstabilität
- 2 =: gute Blockstabilität
- 3 =: befriedigende Blockstabilität
- 4 =: nicht blockstabil, Pulver nach Zerdrücken nicht mehr rieselfähig.

### Bestimmung der Zementstabilität (ZS):

Es wurde eine Zementmischung der nachfolgenden Rezeptur angerührt:

| | |
|---|---|
| Portlandzement | 82.5 g |
| Calcit (CaCO)₃ 10-40 µm | 75 g |
| Quarzsand 200-500 µm | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

### Bestimmung der Haftzugfestigkeit:

Die Haftzugfestigkeiten im Fliesenkleber wurden in folgender Rezeptur überprüft (6 Gew.-% Polymerpulveranteil):

| | |
|---|---|
| Quarzsand | 586 Teile |
| Portlandzement | 350 Teile |
| Cellulose | 4 Teile |
| Dispersionspulver | 60 Teile |
| Wasser | 240 Teile |

Zur Prüfung der Haftzugfestigkeit wurden die Fliesenkleber mit einer 5 mm Zahnspachtel auf Betonplatten aufgezogen. Danach wurden 5 x 5 cm² Steinzeugfliesen eingelegt und 30 Sekunden lang mit einem 2 kg schweren Gewicht beschwert. Anschließend wurden die Fliesen unter den folgenden Bedingungen gemäß DIN CEN 1897:

| | |
|---|---|
| 28T | 28 Tage Trockenlagerung bei Normklima (DIN 50014, 23°C, 50 % Luftfeuchte) |
| 7T/21N | 7 Tage Trockenlagerung bei Normklima, 21 Tage Naßlagerung in Wasser bei 20°C |
| 14T/14T70°C/1T | 14 Tage Normklima, 14 Tage bei 70°C im Trockenschrank, 1 Tag Normklima |
| Frost-Tau | 7 Tage Trockenlagerung bei Normklima, 21 Tage Naßlagerung in Wasser bei 20°C, 25 Frost-Tau-Zyklen (Frostlagerung bei - 15°C, Wasserlagerung bei 12°C) |

Die Haftzugfestigkeit wurde gemäß DIN 18156 nach der Lagerung mit einem Abzugsgerät der Firma Herion mit einer Laststeigerungsrate von 250 N/s bestimmt. Die Meßwerte in N/mm² stellen Mittelwerte aus 5 Messungen dar.

Die Prüfergebnisse sind in den Tabellen 1 und 2 zusammengefaßt.

### Die Abkürzungen haben folgende Bedeutung:

### Hilfsmonomere:

AA = Acrylamid,
AS = Acrylsäure,
AMPS = 2-Acrylamido-2-methylpropansulfonsäure,
VS = Vinylsulfonsäure,
MSA = Maleinsäureanhydrid.
AAGS = Acrylamidoglykolsäure
IS = Itaconsäure
Menge = Anteil des Hilfsmonomers in Gew.-%

FG = Festgehalt der Polymerdispersion in Gew.-%
PH = pH-Wert der Polymerdispersion
BF20 = Brookfield-Viskosität in mPas
MFT = Mindestfilmbildetemperatur der Polymerdispersion in °C
Dw = mittlere Teilchengröße (Gewichtsmittel)
R = Redispergierverhalten
B = Blockfestigkeit
ZS = Zementstabilität

(1) = Haftzugfestigkeit in N/mm² nach Lagerung 28T
(2) = Haftzugfestigkeit in N/mm² nach Lagerung 7T/21N
(3) = Haftzugfestigkeit in N/mm² nach Lagerung 14T/14T70°C/1T
(4) = Haftzugfestigkeit in N/mm² nach Lagerung Frost-Tau
Summe (1-4) = Summe der Haftzugfestigkeiten in in N/mm²

Die Ergebnisse in Tabelle 1 zeigen, daß man auch bei Modifizierung der Vinylesterpolymerisate mit Hilfsmonomereinheiten Pulver mit sehr gutem Redispergierverhalten und Zementstabilität erhält, welche gute Block- und Lagerstabilität aufweisen.

Tabelle 2 zeigt, daß mit der Modifizierung mit Hilfsmonomereinheiten eine deutliche Verbesserung der Haftzugsfestigkeiten erhalten wird, welche bei allen Lagerungen erhalten wird. Diese Verbesserung tritt allerdings nur in einem schmalen Fenster auf, das heißt in einem Bereich von 0.5 bis 1.0 Gew.-%.

**Tabelle 1:**

| Beispiel | Hilfsmonomer | Menge Gew% | FG Gew% | pH | BF20 mPas | MFT °C | Dw | R | B | ZS |
|---|---|---|---|---|---|---|---|---|---|---|
| V.bsp. A | ohne | 0 | 55.0 | 4.1 | 400 | 5 | 950 | 1 | 1 | ja |
| Bsp. 1 | AA | 0.2 | 54.4 | 4.4 | 405 | 5 | 1097 | 1 | 1 | ja |
| Bsp. 2 | AA | 1.5 | 55.4 | 4.0 | 472 | 5 | 1134 | 1 | 1 | ja |
| V.bsp. 3 | AA | 2.0 | 52.1 | 3.9 | 276 | 5 | 1180 | 1 | 1 | ja |
| Bsp. 4 | AS | 0.2 | 55.0 | 4.2 | 450 | 6.5 | 1097 | 1 | 1 | ja |
| Bsp. 5 | AS | 1.5 | 55.0 | 4.2 | 428 | 5 | 1097 | 1 | 1 | ja |
| V.bsp. 6 | AS | 2.0 | 52.7 | 4.2 | 371 | 6 | 1090 | 1 | 1 | ja |
| V.bsp. 7 | AS | 3.0 | 55.0 | 3.5 | 680 | 5 | 1160 | 1 | 1 | ja |
| Bsp. 8 | AMPS | 0.2 | 55.0 | 4.4 | 590 | 6 | 984 | 1 | 1 | ja |
| Bsp. 9 | AMPS | 1.5 | 55.1 | 4 | 560 | 5 | 1097 | 1 | 1 | ja |
| V.bsp.10 | AMPS | 2.0 | 54.6 | 4.2 | 815 | 6 | 1650 | 1 | 1 | ja |
| V.bsp.11 | AMPS | 3.0 | 55.2 | 4.1 | 630 | 6 | 1820 | 1 | 1 | ja |
| Bsp. 12 | VS | 0.2 | 54.8 | 4.4 | 428 | 6.5 | 1204 | 1 | 1 | ja |
| Bsp. 13 | VS | 1.5 | 55.4 | 4.4 | 500 | 5 | 1050 | 1 | 1 | ja |
| V.bsp.14 | VS | 2.0 | 52.6 | 4.3 | 395 | 8 | 1020 | 1 | 1 | ja |
| Bsp. 15 | MSA | 0.2 | 53.9 | 4.3 | 363 | 7 | 1322 | 1 | 1 | ja |
| Bsp. 16 | MSA | 1.5 | 54.8 | 3.7 | 457 | 6 | 1322 | 1 | 1 | ja |
| Bsp. 17 | AAGS | 1.5 | 55.0 | 3.8 | 750 | 5 | 1150 | 1 | 1 | ja |
| V.bsp.18 | AAGS | 2.0 | 52.8 | 4 | 310 | 6 | 1110 | 1 | 1 | ja |
| Bsp. 19 | IS | 0.2 | 55.4 | 4.5 | 640 | 5 | 1120 | 1 | 1 | ja |
| Bsp. 20 | IS | 1.5 | 52.4 | 4.5 | 346 | 3 | 1160 | 1 | 1 | ja |
| V.bsp.21 | IS | 2.0 | 51.6 | 4.9 | 295 | 7 | 1120 | 1 | 1 | ja |

**Tabelle 2:**

| Bsp. | Hilfsmonomer | Menge | (1) | (2) | (3) | (4) |
|---|---|---|---|---|---|---|
| V.bsp. A | ohne | 0 | 1.67 | 0.72 | 1.64 | 0.62 |
| Bsp. 1 | AA | 0.2 | 2.06 | 0.9 | 1.91 | 0.88 |
| Bsp. 2 | AA | 1.5 | 1.95 | 1.11 | 2.31 | 0.95 |
| V.bsp. 3 | AA | 2.0 | 1.67 | 0.6 | 1.21 | 0.59 |
| Bsp. 4 | AS | 0.2 | 1.94 | 0.86 | 2.38 | 0.89 |
| Bsp. 5 | AS | 1.5 | 1.74 | 0.85 | 1.94 | 0.92 |
| V.bsp. 6 | AS | 2.0 | 1.64 | 0.8 | 1.74 | 0.85 |
| V.bsp. 7 | AS | 3.0 | 1.61 | 0.55 | 2.04 | 0.44 |
| Bsp. 8 | AMPS | 0.2 | 2.06 | 0.9 | 1.94 | 0.63 |
| Bsp. 9 | AMPS | 1.5 | 1.76 | 1.12 | 1.62 | 1.03 |
| V.bsp.10 | AMPS | 2.0 | 1.65 | 0.95 | 1.55 | 0.8 |
| V.bsp.11 | AMPS | 3.0 | 1.47 | 0.67 | 1.53 | 0.7 |
| Bsp. 12 | VS | 0.2 | 2.12 | 1.1 | 2.11 | 0.95 |
| Bsp. 13 | VS | 1.5 | 2.28 | 1.05 | 2.26 | 1.05 |
| V.bsp.14 | VS | 2.0 | 1.69 | 0.57 | 1.81 | 0.58 |
| Bsp. 15 | MSA | 0.2 | 2.13 | 0.86 | 2.28 | 0.87 |
| Bsp. 16 | MSA | 1.5 | 2.11 | 0.9 | 2.11 | 0.83 |
| Bsp. 17 | AAGS | 1.5 | 1.53 | 0.58 | 2.17 | 0.61 |
| V.bsp.18 | AAGS | 2.0 | 1.46 | 0.64 | 1.6 | 0.57 |
| Bsp. 19 | IS | 0.2 | 1.6 | 0.58 | 2.26 | 0.62 |
| Bsp. 20 | IS | 1.5 | 1.38 | 0.55 | 1.77 | 0.71 |
| V.bsp.21 | IS | 2.0 | 1.38 | 0.53 | 1.31 | 0.57 |

## Patentansprüche

1. Verwendung von in Wasser redispergierbaren Polymerpulvern auf Basis von mit Schutzkolloiden stabilisierten Vinylesterpolymerisaten in Baukleber-Zusammensetzungen, **dadurch gekennzeichnet, daß** die Vinylester-Polymerisate 0.2 bis 1.5 Gew.-%, bezogen auf das Gesamtgewicht der Vinylester-Polymerisate, Hilfsmonomereinheiten enthalten, welche sich von Monomeren mit einer höheren Wasserlöslichkeit als Vinylacetat ableiten.

2. Verwendung nach Anspruch 1, **dadurch gekennzeichnet, daß** als Hilfsmonomereinheiten ein oder mehrere aus der Gruppe umfassend ethylenisch ungesättigte Mono- und Dicarbonsäuren sowie deren Anhydride, ethylenisch ungesättigte Carbonsäureamide und -nitrile, ethylenisch ungesättigte Sulfonsäuren und deren Salze enthalten sind.

3. Verwendung nach Anspruch 1 oder 2, **dadurch gekennzeichnet, daß** als Vinylester-Polymerisate Vinylester-Ethylen-Copolymere, welche gegebenenfalls noch Fumarsäure- oder Maleinsäurediesterenthalten, oder Vinylester-Ethylen-Vinylchlorid-Copolymere , oder Vinylacetat-Copolymere mit einem oder mehreren copolymerisierbaren Vinylestern, welche gegebenenfalls noch Ethylen enthalten, oder Vinylester-Acrylsäureester-Copolymerisate, welche gegebenenfalls noch Ethylen enthalten, enthalten sind.

4. Verwendung nach Anspruch 1 bis 3, **dadurch gekennzeichnet, daß** als Schutzkolloide ein oder mehrere teilverseifte oder vollverseifte Polyvinylalkohole enthalten sind.

5. Verwendung nach Anspruch 4, **dadurch gekennzeichnet, daß** ein oder mehrere Polyvinylalkohole aus der Gruppe umfassend teilverseifte Polyvinylalkohole mit einem Hydrolysegrad von 80 bis 95 Mol-% und einer Höpplerviskosität, in 4 %-iger wässriger Lösung von 1 bis 30 mPas, und teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas, enthalten sind.

6. Verwendung nach Anspruch 5, **dadurch gekennzeichnet, daß** ein oder mehrere Polyvinylalkohole aus der Gruppe umfassend Polyvinylalkohole mit einem Hydrolysegrad von 85 bis 94 Mol-% und einer Höpplerviskosität, in 4 %-iger wässriger Lösung von 3 bis 15 mPas (enthalten sind.

7. Verwendung nach Anspruch 1 bis 6, **dadurch gekennzeichnet, daß** die Polymerpulver in zementhaltige Baukleberrezepturen verwendet werden.

8. Verwendung nach Anspruch 1 bis 6, **dadurch gekennzeichnet, daß** die Polymerpulver in zementfreien Baukleberrezepturen verwendet werden.

9. Verwendung nach Anspruch 7 oder 8, **dadurch gekennzeichnet, daß** die Polymerpulver als Fliesenkleber verwendet werden.

10. Verwendung nach Anspruch 8, **dadurch gekennzeichnet, daß** die Polymerpulver als Vollwärmeschutzkleber verwendet werden.

## Claims

1. Use of water-redispersible polymer powders based on protective colloid stabilized vinyl ester polymers in building adhesive compositions, **characterized in that** the vinyl ester polymers contain from 0.2 to 1.5% by weight, based on the overall weight of the vinyl ester polymers, of auxiliary monomer units derived from monomers having a higher water solubility than vinyl acetate.

2. Use as claimed in Claim 1, **characterized in that** one or more auxiliary monomer units are present from the group consisting of ethylenically unsaturated monocarboxylic and dicarboxylic acids and their anhydrides, ethylenically unsaturated carboxamides and carbonitriles, ethylenically unsaturated sulphonic acids and their salts.

3. Use as claimed in Claim 1 or 2, **characterized in that** vinyl ester polymers present comprise vinyl ester-ethylene copolymers, further comprising fumaric or maleic diesters if desired, or vinyl ester-ethylene-vinyl chloride copolymers, or vinyl acetate copolymers with one or more copolymerizable vinyl esters, further comprising ethylene if desired.

4. Use as claimed in Claim 1 to 3, **characterized in that** protective colloids present comprise one or more partially hydrolysed or fully hydrolysed polyvinyl alcohols.

5. Use as claimed in Claim 4, **characterized in that** one or more polyvinyl alcohols are present from the group consisting of partially hydrolysed polyvinyl alcohols having a degree of hydrolysis of from 80 to 95 mol% and a Höppler viscosity in 4% strength aqueous solution of from 1 to 30 mPas and partially hydrolysed, hydrophobically modified polyvinyl alcohols having a degree of hydrolysis of from 80 to 95 mol% and a Höppler viscosity in 4% strength aqueous solution of from 1 to 30 mPas.

6. Use as claimed in Claim 5, **characterized in that** one or more polyvinyl alcohols are present from the group consisting of polyvinyl alcohols having a degree of hydrolysis of from 85 to 95 mol% and a Höppler viscosity in 4% strength aqueous solution from 3 to 15 mPas.

7. Use as claimed in any of Claims 1 to 6, **characterized in that** the polymer powders are used in cementitious building adhesive formulations.

8. Use as claimed in any of Claims 1 to 6, **characterized in that** the polymer powders are used in cement-free building adhesive formulations.

9. Use as claimed in Claim 7 or 8, **characterized in that** the polymer powders are used as tile adhesives.

10. Use as claimed in Claim 8, **characterized in that** the polymer powders are used as exterior insulation system adhesives.

## Revendications

1. Utilisation de poudres de polymères redispersables dans l'eau, à base de polymères d'esters vinyliques stabilisés avec des colloïdes protecteurs, dans des compositions de colles pour le bâtiment, **caractérisée en ce que** les polymères d'esters vinyliques contiennent de 0,2 à 1,5 % en poids, par rapport au poids total des polymères d'esters vinyliques, de motifs monomères auxiliaires qui dérivent de monomères ayant une plus grande solubilité dans l'eau que l'acétate de vinyle.

2. Utilisation selon la revendication 1, **caractérisée en ce qu'**un ou plusieurs composés choisis dans le groupe comprenant les acides mono- et dicarboxyliques à insaturation éthylénique ainsi que leurs anhydrides, les carboxamides et carbonitriles à insaturation éthylénique, les acides sulfoniques à insaturation éthylénique et leurs sels, sont contenus en tant que motifs monomères auxiliaires.

3. Utilisation selon la revendication 1 ou 2, **caractérisée en ce que** des copolymères ester vinylique/éthylène, qui éventuellement contiennent encore des diesters d'acide fumarique ou maléique, ou des copolymères ester vinylique/éthylène/chlorure de vinyle, ou des copolymères d'acétate de vinyle avec un ou plusieurs esters vinyliques copolymérisables, qui éventuellement contiennent encore de l'éthylène, ou des copolymères ester vinylique/ester d'acide acrylique, qui éventuellement contiennent encore de l'éthylène, sont contenus en tant que polymères d'esters vinyliques.

4. Utilisation selon l'une quelconque des revendications 1 à 3, **caractérisée en ce qu'**un ou plusieurs poly(alcool vinylique)s partiellement ou complètement saponifiés sont contenus en tant que colloïdes protecteurs.

5. Utilisation selon la revendications 4, **caractérisée en ce que** sont contenus un ou plusieurs poly(alcool vinylique)s choisis dans le groupe comprenant les poly(alcool vinylique)s partiellement saponifiés ayant un degré d'hydrolyse de 80 à 95 % en moles et une viscosité Höppler, en solution aqueuse à 4 %, de 1 à 30 mPa.s, et les poly(alcool vinylique)s partiellement saponifiés, à modification hydrophobe, ayant un degré d'hydrolyse de 80 à 95 % en moles et une viscosité Höppler, en solution aqueuse à 4 %, de 1 à 30 mPa.s.

6. Utilisation selon la revendication 5, **caractérisée en ce que** sont contenus un ou plusieurs poly(alcool vinylique)s choisis dans le groupe comprenant les poly(alcool vinylique)s ayant un degré d'hydrolyse de 85 à 94 % en moles et une viscosité Höppler, en solution aqueuse à 4 %, de 3 à 15 mPa.s.

7. Utilisation selon l'une quelconque des revendications 1 à 6, **caractérisée en ce que** les poudres de polymères sont utilisées dans des formules de colles pour le bâtiment contenant du ciment.

8. Utilisation selon l'une quelconque des revendications 1 à 6, **caractérisée en ce que** les poudres de polymères sont utilisées dans des formules de colles pour le bâtiment sans ciment.

9. Utilisation selon la revendication 7 ou 8, **caractérisée en ce que** les poudres de polymères sont utilisées comme colle pour carreaux.

10. Utilisation selon la revendication 8, **caractérisée en ce que** les poudres de polymères sont utilisées en tant que colle pour isolation thermique renforcée.
